# EUROPÄISCHE PATENTANMELDUNG

(11) **EP 2 487 634 A1**
(43) Veröffentlichungstag der Anmeldung: **15.08.2012**
(21) Anmeldenummer: 11154433.4
(22) Anmeldetag: 14.02.2011
(51) Int. Cl.: G06Q 20/00

(54) **System und Verfahren zum Genehmigen von durch Transaktionsverweise identifizierten Transaktionen**

(71) Anmelder: Bodmer, Thomas, 5020 Salzburg (AT); Donhauser, Thomas, 5020 Salzburg (AT)
(72) Erfinder: Bodmer, Thomas, 5020 Salzburg (AT); Donhauser, Thomas, 5020 Salzburg (AT)
(74) Vertreter: Dendorfer, Claus

(57) **Zusammenfassung**

Bei einem Verfahren zum Genehmigen von Transaktionen hinterlegen Gläubiger Transaktionen in einer Zentralrecheneinheit, und jede Transaktion wird einem Transaktionsverweis zugeordnet. Der Transaktionsverweis ist ab der Zuordnung nur für eine bestimmte Zeit gültig und umfasst maximal sechs Zeichen. Der Transaktionsverweis wird zumindest nach Ablauf der Gültigkeit erneut für weitere Transaktionen verwendet. Ein Schuldner, der die Transaktion zu erfüllen hat, erfragt von der Zentralrecheneinheit unter Bekanntgabe des Transaktionsverweises innerhalb der Gültigkeitsdauer die zugeordnete Transaktion. Der Schuldner erhält eine Nachricht, die auf der Transaktion basiert, und genehmigt diese im Falle des Einverständnisses. Die Erfindung umfasst eine Zentralrecheneinheit zum Verwalten und Ausführen der Transaktionen, ein oder mehrere Computer oder mobile Endgeräte zum Hinterlegen und/oder Genehmigen von Transaktionen sowie einen computerlesbaren Datenträger.

## Beschreibung

### GEBIET DER ERFINDUNG

Die vorliegende Erfindung betrifft das Gebiet der transaktionellen Datenverarbeitung.

### HINTERGRUND DER ERFINDUNG

Das Wirtschaftsleben ist vom Austausch von Leistungen geprägt. Eine Partei erbringt eine Leistung für eine andere Partei, während die andere Partei eine Gegenleistung für die eine Partei erbringt. Diese Vorgänge können in Form von Transaktionen in technischen Systemen abgebildet werden. Die technischen Systeme übernehmen die organisatorische Abwicklung der Transaktion, die von den Transaktionspartnern autorisiert werden muss.

Zu wichtigen Anwendungen dieser Art zählen Systeme zur Abwicklung bargeldloser Zahlungen. Im Zeitalter zunehmenden Bedarfs, in jeder Situation und unabhängig von Ort und Tageszeit bargeldlos Zahlungen zu leisten, tritt das Mobiltelefon als Zahlungsinstrument immer häufiger in Erscheinung, zumal es ein praktikables und sicheres, da persönliches Medium darstellt. Das Mobiltelefon dient dabei als Schlüssel zu Autorisierungsvorgängen, die über PCs oder Kassensysteme und andere digitale Endgeräte mit Internetverbindung abgewickelt werden.

Die Offenlegungsschrift WO 2009/000130 A1 beschreibt ein *payment and authorization system,* in dem der Zahler eine temporäre Identifikation generieren lässt, die er einem Zahlungsempfänger bekannt gibt. Dieser setzt sich seinerseits mit dem System in Verbindung und löst die Zahlung unter Bezugnahme auf den Identifikationscode aus. Dabei stellt der Zahler eine Art Blankoscheck aus, da es in der Folge dem Zahlungsempfänger obliegt, den Betrag festzulegen, ohne dass dieser vom Zahler autorisiert wird. Abgesehen davon, dass ein solches Vorgehen in diversen Fällen (zB beim Bezahlen im Internet) aus sicherheitsrelevanten Gründen kaum zur Anwendung kommen würde, entspricht es auch nicht den gesetzlichen Vorgaben, wie sie gemäß der EU-weit implementierten *Payment Service Directive* (RL 2007/64/EG) seit November 2009 bindend sind.

Die Offenlegungsschrift US 2007/255662 A1 beschreibt eine Technik, mit der die Authentizität einer übermittelten Transaktion nachgewiesen werden kann, in dem diese mit einem Schlüssel versehen wird und so die Transaktion als originär verifiziert. Es verbleibt beim Zahler jedoch ein vergleichbares Risiko wie in dem System, das in der Offenlegungsschrift WO 2009/000130 beschrieben worden ist.

Bestehende Zahlungssysteme weisen daher Sicherheitsmängel auf, was die Festlegung des Zahlungsbetrages bei der Autorisierung einer Zahlung betrifft. Nach Artikel 60 und 61 der oben erwähnten Richtlinie 2007/64/EG haften Finanzinstitute seit November 2009 für Ausfälle von nicht autorisierten Zahlungen. Es liegt daher alleine schon im Interesse der Finanzinstitute, über Zahlungssysteme zu verfügen, die die Autorisierung eines Zahlungsvorganges, der vom Gläubiger initiiert worden ist, in definierter Höhe ermöglichen.

Eine weitere Einschränkung bestehender bargeldloser Zahlungssysteme liegt darin begründet, dass die Identität des Zahlers und des Zahlungsempfängers in der Regel gegenseitig nachgewiesen werden muss. Zumindest werden statische Informationen über das Zahlungsmittel wie Kontonummer samt Bankleitzahl oder Kreditkartendaten übertragen, die eine Identifikation des Zahlers ermöglichen. Damit ist ein wesentlicher Unterschied gegenüber der Verwendung von Bargeld gegeben, das keine Identifikation der Transaktionspartner untereinander erfordert. Erstrebenswert ist ein bargeldloses Zahlungssystem, das eine vergleichbare Anonymität zumindest eines Transaktionspartners wie bei der Verwendung von Bargeld gewährleistet, und das in der Handhabung einfach ist.

### AUFGABEN UND ZUSAMMENFASSUNG DER ERFINDUNG

Es ist eine Aufgabe der vorliegenden Erfindung, eine Transaktion von einem Transaktionspartner in einem zeitsparenden Vorgang autorisieren zu lassen, wobei die Identität dieses Transaktionspartners gegenüber einem anderen Transaktionspartner nicht preisgegeben wird.

Die vorliegende Erfindung ist durch die unabhängigen Ansprüche definiert. Die abhängigen Ansprüche betreffen optionale Merkmale einiger Ausführungsbeispiele der Erfindung.

Die vorliegende Erfindung geht von der Idee aus, einen Code (Transaktionsverweis) zu verwenden, der von dem einen Transaktionspartner an den anderen Transaktionspartner weitergegeben wird. Dabei zeichnet sich der verwendete Code durch seine Kürze aus, sodass er einfach handhabbar ist.

Gemäß vielen Ausführungsformen der Erfindung fordert entweder der Gläubiger oder der Schuldner einer Transaktion vom System einen eindeutigen Transaktionsverweis an, der auf eine bestimmte Transaktion (zB Zahlungsvorgang) verweist. Im nächsten Schritt teilt der eine Transaktionspartner dem anderen den Transaktionsverweis mit. Der Gläubiger erzeugt im System die Transaktion, welche dem Transaktionsverweis zugeordnet ist. Der Schuldner übermittelt den Transaktionsverweis an das System und erhält daraufhin die dem Transaktionsverweis zugeordnete Transaktion. Der Schuldner wird dadurch in die Lage versetzt, sämtliche relevanten Daten der Transaktion zu überprüfen. Mit dem Genehmigen dieser Transaktion akzeptiert der Schuldner die in der Transaktion enthaltene Forderung des Gläubigers. Daraufhin veranlasst das System die Abwicklung der genehmigten Transaktion. Im Falle eines Zahlungsvorganges wird ein Abbuchungsauftrag an das Bankinstitut des Schuldners übermittelt. Die Kommunikation erfolgt beispielsweise über das Internet und ein Mobilfunknetz.

In manchen Ausgestaltungen wird die Transaktion von beiden Transaktionspartnern willentlich eingeleitet. Die Erfindung kann unabhängig von zusätzlicher Hardware hergestellt werden. Sie lässt sich beispielsweise rein software-basiert in digitalen Endgeräten und in IT-Infrastrukturen (Client/Server) realisieren.

In manchen Ausgestaltungen wird die Erfindung zur Manipulation von sensitiven und geschützten Daten eingesetzt. Die Erfindung kann dort zum Einsatz kommen, wo vertrauliche Informationen ausgetauscht werden, wie zB Unterschriften, Codes, Pläne und Zahlungsvorgänge. Vorzugsweise wird die hier beschriebene Erfindung in einem Buchungs- und Verrechnungssystem bzw. im bargeldlosen Zahlungsverkehr eingesetzt. Unter Manipulation ist in diesem Zusammenhang die Valutierung von Konten zu verstehen, d.h. das Belasten und Gutschreiben von Werten. Entscheidend ist hierbei, dass die Kontoinhaber diese Manipulationen gegenseitig autorisieren und damit wirksame Vereinbarungen treffen.

Mit der Referenzierung auf vertrauliche Transaktionen durch Vergabe von speziellen Transaktionsverweisen (zB Nummern) und der Einforderung der unbedingten Bestätigung der Transaktionen durch alle an der Transaktion Beteiligten, agiert das System als *trusted third party,* als temporärer Treuhänder zwischen den Transaktionspartnern.

In vielen Ausgestaltungen ist die Verbindlichkeit der übermittelten Transaktion durch die gegenseitige Autorisierung für alle Beteiligten gegeben. Diese sogenannte Nicht-Abstreitbarkeit *(non-repudiation,* siehe ISO 7498-2:1989 Information processing systems) einer Transaktion gewährleistet sowohl dem Gläubiger als auch dem Schuldner eine risikofreie Abwicklung der Transaktion. Das System weist außerdem in manchen Ausführungsformen unmittelbar nach Abschluss der Transaktion den aktuellen Kontostand (das sind spezifische Datenstrukturen, auf die Soll und Haben gebucht oder Informationen gespeichert werden) der Parteien aus, d.h. Guthaben und Belastung sind ohne Zeitverzug einsehbar.

Das Verfahren bietet in bevorzugten Ausgestaltungen allen Parteien Sicherheit und Anonymität. Bevorzugte Ausführungsbeispiele wenden die vorliegende Erfindung im bargeldlosen Zahlungsverkehr an. Für den Verrechnungsvorgang werden seitens des Zahlungsempfängers der zu zahlende Betrag, seitens des Zahlers der den Betrag repräsentierende Transaktionsverweis ins System eingegeben. Die sensitiven und geschützten Daten, zu denen die Bankdaten, Guthaben, Namen der handelnden Personen, Telefonnummern oder andere personenspezifische Informationen zählen, spielen bei diesem Ablauf keine Rolle. Auf den digitalen Endgeräten werden in keinem Fall Werte abgespeichert. So führt der Verlust eines Endgerätes nicht zum Verlust von sensitiven Daten. Mit Ausnahme der nutzerdefinierenden Informationen werden keine Daten am Endgerät verspeichert, wobei die nutzerdefinierenden Informationen nur in Kombination mit der PIN von Relevanz sind. Alle Daten und deren Bearbeitung werden von einer Zentralrecheneinheit verwaltet bzw. umgesetzt.

Die vorliegende Erfindung umfasst neben dem beschriebenen Verfahren ein System, in dem das Verfahren implementiert ist. Das System umfasst eine Zentralrecheneinheit zum Verwalten und Ausführen der Transaktionen sowie Endgeräte zur Kommunikation mit den Transaktionspartnern. Endgeräte umfassen Computer und mobile Endgeräte.

Die vorliegende Erfindung umfasst auch einen maschinenlesbaren Datenträger mit geeigneten Programm-Anweisungen zur Ausführung des Verfahrens auf einer Zentralrecheneinheit, Client-PCs und/oder mobilen Endgeräten. Der maschinenlesbare Datenträger kann jegliche Art eines physischen oder nicht-physischen Datenträgers sein, wie zum Beispiel eine Diskette oder eine CD-ROM oder ein Halbleiterspeicher oder ein Signal, das über ein Computernetz übertragen wird.

### KURZE BESCHREIBUNG DER ZEICHNUNGEN

Weitere Merkmale, Ziele und Vorteile der Erfindung ergeben sich aus der folgenden ausführlichen Beschreibung in Verbindung mit den beigefügten schematischen Zeichnungen, in der:
Fig. 1 eine schematische Darstellung eines Transaktionssystems und seiner Komponenten zeigt,
Fig. 2 die Beziehungen der Komponenten des Transaktionssystems untereinander darstellt,
Fig. 3 ein erstes und ein drittes bevorzugtes Ausführungsbeispiel der Erfindung zeigt, und
Fig. 4 ein zweites bevorzugtes Ausführungsbeispiel der Erfindung darstellt.

### AUSFÜHRLICHE BESCHREIBUNG VON AUSFÜHRUNGSBEISPIELEN DER ERFINDUNG

Die einzelnen Ausführungsbeispiele heben nur einzelne Merkmale der Erfindung hervor. Diese Darstellung dient der Übersichtlichkeit und der besseren Verständlichkeit der Erfindung. Jene Merkmale der Erfindung, die unabhängig von anderen Merkmalen der Erfindung sind, können beliebig miteinander kombiniert werden.

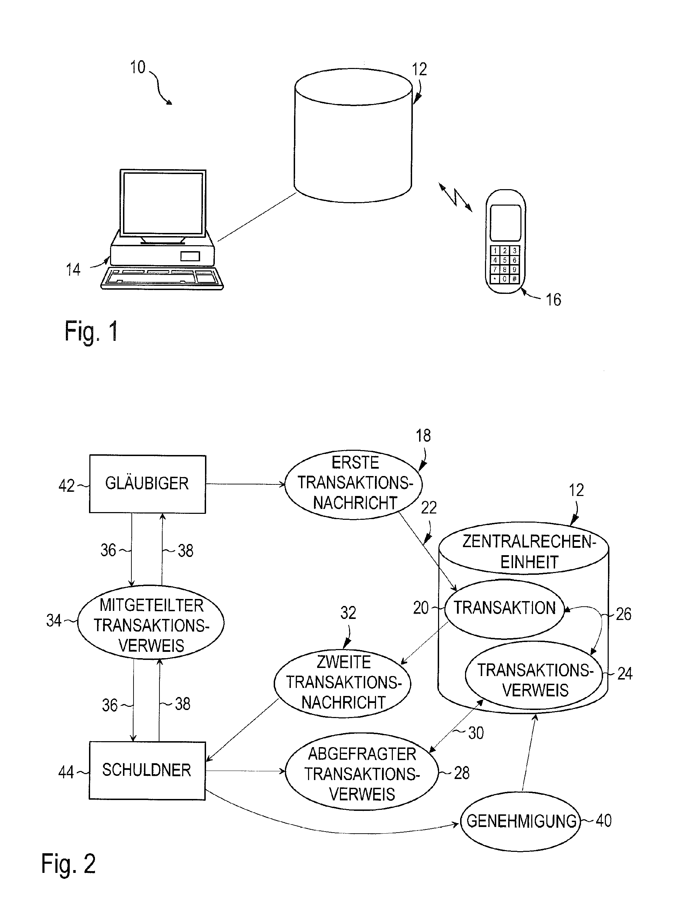

Fig. 1 zeigt ein Ausführungsbeispiel eines Transaktionssystems 10, in dem das Verfahren der vorliegenden Erfindung ausgeführt wird. Das Transaktionssystem 10 besteht aus einer Zentralrecheneinheit 12, in der Transaktionen 20 gespeichert werden, und die mit Transaktionspartnern kommuniziert. Transaktionspartner umfassen Computer 14, die mittels Internet oder einem sonstigen Netzwerk mit der Zentralrecheneinheit 12 verbunden sind, und/oder mobile Endgeräte 16, die über Mobilfunk mit der Zentralrecheneinheit verbunden sind.

Mobilfunk umfasst GSM-, GRPS-, EDGE-, UMTS-, HSDPA-, HSUPA-, LTE-Netze. Mobile Endgeräte 16 umfassen Mobiltelefone und Smartphones, die eine Datenverbindung zur Zentralrecheneinheit 12 aufbauen. Die Datenverbindungen werden je nach Ausführungsbeispiel über GRPS, EDGE, UMTS, HSDPA oder HSUPA realisiert. In einem anderen Ausführungsbeispiel werden Daten zwischen dem mobilen Endgerät 16 und der Zentralrecheneinheit 12 über SMS oder über MMS oder über E-Mail oder über eine Sprachtelefonieanwendung ausgetauscht.

In einem Ausführungsbeispiel wird die Sprachtelefonieanwendung für das mobile Endgerät 16 durch ein Call Center realisiert, in dem der Call Center Agent anhand der mündlichen Ausführungen des Nutzers am mobilen Endgerät 16 entsprechende Daten in einen Computer 14 im Call Center eingibt. In einem anderen Ausführungsbeispiel wird die Tätigkeit des Call Center Agent durch ein Sprachansagesystem (Interactive Voice Response, IVR) realisiert, das auf Spracheingabe und/oder DTMF-Tastentöne reagiert. Die Sprachtelefonieanwendung lässt ein mobiles Endgerät 16 gegenüber der Zentralrecheneinheit 12 wie ein Computer 14 erscheinen. Anstelle eines mobilen Endgerätes kann in anderen Ausführungsbeispielen auch ein Festnetztelefon in Kombination mit der Sprachtelefonieanwendung eingesetzt werden.

Transaktionspartner nehmen entweder als Gläubiger 42 oder als Schuldner 44 einer Transaktion 20 teil. Gläubiger 42 und Schuldner 44 bedienen sich der Genehmigung und Ausführung der Transaktion 20 entweder eines Computers 14 oder eines mobilen Endgerätes 16.

Fig. 2 zeigt ein Ausführungsbeispiel zur Genehmigung 40 einer Transaktion 20. Der Gläubiger 42 erstellt eine erste Transaktionsnachricht 18, die er an die Zentralrecheneinheit 12 sendet. Die erste Transaktionsnachricht 18 enthält Daten, die für das Genehmigen und Ausführen der Transaktion relevant sind. Die Daten der ersten Transaktionsnachricht 18 müssen nicht vollständig für das Beschreiben einer Transaktion sein, falls für die Transaktion relevante Daten des Gläubigers 42 in einem Profil in der Zentralrecheneinheit 12 gespeichert sind. Die Zentralrecheneinheit 12 extrahiert die in der ersten Transaktionsnachricht 18 enthaltene Transaktion 20, reichert diese gegebenenfalls mit Informationen aus Nutzerprofilen und mit weiteren Daten an, die für die Transaktion relevant sind, und speichert 22 die Transaktion 20. Die Zentralrecheneinheit 12 errechnet einen Transaktionsverweis 24, der eindeutig auf die Transaktion 20 verweist. Mit der Zuordnung 26 ist die Transaktion 20 über den zugeordneten Transaktionsverweis 24 identifizierbar. Der Gläubiger 42 erfragt den zugeordneten Transaktionsverweis 24 von der Zentralrecheneinheit 12 und erhält den mitzuteilenden Transaktionsverweis 34. Der Gläubiger 42 teilt den mitzuteilenden Transaktionsverweis 34 dem Schuldner 44 mit. Der Schuldner 44 richtet eine Anfrage mittels anzufragendem Transaktionsverweis 28 an die Zentralrecheneinheit 12. Wenn der anzufragende Transaktionsverweis 28 dem mitzuteilenden Transaktionsverweis 34 entspricht, ist die Zentralrecheneinheit 12 durch Vergleich 30 des anzufragenden Transaktionsverweises 28 mit den gespeicherten Transaktionsverweisen in der Lage, den geeigneten Transaktionsverweis 24 zu finden und über die Zuordnung 26 die entsprechende Transaktion 20 zu ermitteln. Die Zentralrecheneinheit 12 erstellt eine zweite Transaktionsnachricht 32, die auf den in der Transaktion 20 enthaltenen Angaben beruht. Die zweite Transaktionsnachricht 32 kann mehr oder weniger Informationen aus der Transaktion 20 umfassen und durch weitere Informationen, beispielsweise aus Nutzerprofilen der Transaktionspartner oder Dritter versehen werden. Falls der Schuldner 44 mit dem Inhalt der zweiten Transaktionsnachricht 32 einverstanden ist, führt er die Genehmigung 40 der zugrunde liegenden Transaktion 20 aus. Damit wird die Zentralrecheneinheit 12 autorisiert, die in der Transaktion 20 enthaltenen Anweisungen auszuführen.

In einem anderen Ausführungsbeispiel übernimmt ein Dritter die Erstellung der ersten Transaktionsnachricht 18.

Transaktionsverweise sind zeitlich beschränkt gültige und daher wieder verwendbare Zeichenfolgen, über die Transaktionen ausgetauscht werden. Die zeitliche Beschränkung erlaubt es der Zentralrecheneinheit, Transaktionen und deren zugeordnete Transaktionsverweise nach Ablauf der Gültigkeit zu löschen und den dadurch frei gewordenen Transaktionsverweis für neue Transaktion wiederum zu verwenden. Dieses Verfahren gestattet die Verwendung möglichst kurzer Zeichenfolgen, weil bei einer verhältnismäßig kurzen Gültigkeitsdauer nur wenige Transaktionsverweise vorgehalten werden müssen. Die notwendige Länge des Transaktionsverweises, die zur eindeutigen Identifikation der zugeordneten Transaktion notwendig ist, variiert demnach, wie lange ein Transaktionsverweis tatsächlich durchschnittlich gültig ist und wie viele parallele Transaktionen unterstützt werden müssen. In einem weiteren Ausführungsbeispiel werden die Anzahl der Zeichen in den Transaktionsverweisen so gering wie möglich gehalten, um bei einem bestimmten Verkehrsaufkommen von Transaktionen gerade ausreichend viele Transaktionsverweise über die tatsächliche durchschnittliche Gültigkeitsdauer der Transaktionsverweise vorzuhalten.

In einem Ausführungsbeispiel ist der Transaktionsverweis maximal 30 Sekunden gültig, oder maximal 1 Minute, oder maximal 5 Minuten, oder maximal 10 Minuten, oder maximal 15 Minuten, oder maximal 30 Minuten, oder maximal 60 Minuten, oder maximal 6 Stunden, oder maximal 12 Stunden, oder maximal 1 Tag. Je nach Verkehrsaufkommen kann der Transaktionsverweis auch kürzer oder länger als hier angegeben realisiert werden. In manchen Ausführungsformen wird die Anzahl der Zeichen der Transaktionsverweise in Abhängigkeit von einer beobachteten oder erwarteten Transaktionsrate variiert, wobei als Transaktionsrate beispielsweise die Anzahl der offenen, noch nicht genehmigten Transaktionen verstanden werden kann.

In einem Ausführungsbeispiel weist ein Transaktionsverweis maximal sechs Zeichen auf, in einem anderen maximal fünf Zeichen, in wieder einem anderen maximal vier Zeichen, maximal drei Zeichen, maximal zwei Zeichen oder ein Zeichen. Die Anzahl der Zeichen wird an den jeweiligen Bedarfsfall angepasst und kann mehr oder weniger Zeichen umfassen als hier ausgeführt.

In einem Ausführungsbeispiel bestimmt die Zentralrecheneinheit mit einem Zufallsgenerator eine Zahl aus n, wobei n variabel ist. In einem anderen Ausführungsbeispiel werden Zeichenfolgen zufällig aus wählbaren Zeichensätzen bestimmt.

In weiteren Ausführungsbeispielen wird eine Sammlung (Pool) von in Frage kommenden Transaktionsverweisen verwaltet, seien es Nummern oder Kombinationen aus einem Satz von Zeichen aus wählbaren Zeichensätzen. Die Zentralrecheneinheit 12 betreibt ein aktives Management des Pools verfügbarer Transaktionsverweise. Wird ein Transaktionsverweis durch Zeitablauf oder durch Verwendung ungültig, wird jener Transaktionsverweis entweder sofort oder nach Ablauf einer vorbestimmten Wartezeit wieder in den Pool verfügbarer Transaktionsverweise aufgenommen.

In einem anderen Ausführungsbeispiel umfasst das aktive Management des Pools verfügbarer Transaktionsverweise die Verringerung oder Vergrößerung der Anzahl der Zeichen der Transaktionsverweise. Dies geschieht verkehrsabhängig und führt dazu, dass in verkehrsschwächeren Zeiten kürzere Transaktionsverweise im Umlauf sind als in verkehrsstärkeren Zeiten. Das aktive Management des Pools verfügbarer Transaktionsverweise bewirkt einen sparsamen Gebrauch im Nummern- oder Zeichenraum der Transaktionsverweise, die dadurch möglichst kurz gehalten werden können.

In anderen Ausführungsbeispielen wird der nächste benötigte Transaktionsverweis nicht zufällig, sondern anhand eines determinierten Regelwerks gewählt. In einem Ausführungsbeispiel wird das nächste Element aus einer sortierten Liste von Transaktionsverweisen ausgewählt.

In einem weiteren Ausführungsbeispiel wird die Gültigkeit eines Transaktionsverweises 24 lokal eingeschränkt. Die Zentralrecheneinheit 12 bestimmt den Aufenthaltsort des Schuldners 44. Der Schuldner 44 muss sich innerhalb der lokalen Beschränkung aufhalten, um die Transaktion 20 zu genehmigen. In einem Ausführungsbeispiel wird der Ort des Schuldners 44, der sich eines mobilen Endgerätes 16 bedient, auf Mobilfunkzellen eingeschränkt. In einem anderen Ausführungsbeispiel wird für die Ortung des Schuldners 44 ein Satellitennavigationssystem eingesetzt. In weiteren Ausführungsbeispielen muss sich der Schuldner 44 in einer bestimmten Nähe zum Gläubiger 42 aufhalten, beispielsweise müssen sich beide in der gleichen Mobilfunkzelle aufhalten. In einem weiteren Ausführungsbeispiel legt der Gläubiger 42 fest, wo sich der Schuldner 44 zum Zeitpunkt der Genehmigung aufhalten muss.

In einem weiteren Ausführungsbeispiel führt die lokale Einschränkung der Transaktionsverweise zu einer Reduktion der Anzahl der Zeichen der Transaktionsverweise, da diese nur innerhalb ihres lokalen und temporären Gültigkeitsraumes eindeutig sein müssen. Im Rahmen eines aktiven Managements des Pools verfügbarer Transaktionsverweise kann die Anzahl der Zeichen in einem Transaktionsverweis in den lokalen Gültigkeitsräumen je nach Verkehrsumfang differieren.

In einem Ausführungsbeispiel werden die ersten Transaktionsnachrichten 18 und die zweiten Transaktionsnachrichten 32 mit einem asymmetrischen Public-Key verschlüsselt, wobei das bewährte Rivest-Shamir-Adleman-Verfahren (RSA-Verschlüsselung) gewählt wird, siehe http://www.rsa.com. Die zugeordneten Antworten werden mit einem AES-Key verschlüsselt, der sich bei jeder Interaktion erneuert. AES: steht fürAdvanced Encryption Standard; siehe http://csrc.nist.gov/archive/aes/round2/ r2report.pdf.

In einem anderen Ausführungsbeispiel registrieren sich Nutzer des Transaktionssystems 10 mit ihren persönlichen Daten (Name, Telefonnummer, Geburtsdatum, Bankverbindung usw.) bei der Zentralrechnereinheit 12 und erhalten dort eine Benutzerkennung (nutzerdefinierende Informationen), eine PIN und ein Systemkonto. Die nutzerdefinierenden Informationen werden auch auf dem Endgerät abgelegt. Bei jedem Zugriff auf das Systemkonto wird die nutzerdefinierenden Informationen mit der eingegeben PIN übertragen und auf Richtigkeit hin überprüft. Durch ein authentifizierendes *Challenge-Response-Verfahren* kann der Nutzer feststellen, ob er seinerseits mit der Zentralrecheneinheit 12 in Verbindung steht.

In einem weiteren Ausführungsbeispiel erfragt nicht der Gläubiger 42 den Transaktionsverweis 20, sondern der Schuldner 44, welcher von der Zentralrecheneinheit 12 einen mitzuteilenden Transaktionsverweis 34 erhält. Der Schuldner 44 teilt dem Gläubiger 42 den mitzuteilenden Transaktionsverweis 34 mit. Wenn nun der Gläubiger die erste Transaktionsnachricht 18 an die Zentralrecheneinheit 12 übermittelt, teilt er den mitgeteilten Transaktionsverweis 34 mit. In diesem Fall ordnet die Zentralrecheneinheit 12 die Transaktion 20 nicht einem neuen Transaktionsverweis zu, sondern nimmt den mitgeteilten Transaktionsverweis 34.

In einem Ausführungsbeispiel erfolgt das Mitteilen 36, 38 des mitzuteilenden Transaktionsverweises zwischen Gläubiger 42 und Schuldner 44 ohne maschinelle Unterstützung, beispielsweise mündlich. In einem anderen Ausführungsbeispiel werden Telekommunikationseinrichtungen in Anspruch genommen, um den mitzuteilenden Transaktionsverweis 34 mitzuteilen, beispielsweise SMS, MMS, E-Mail oder eine spezifische Nachricht zwischen zwei Computerprogrammen zur Transaktionsabwicklung.

Bevorzugte Ausführungsbeispiele der Erfindung werden im Zahlungsverkehr, im Bargeldbezug am Bankomatautomaten (ATM), in Kundenbindungssystemen, im Handel und überall dort angewandt, wo die beteiligten Parteien den Datenaustausch, zB für die Zahlung, gegenseitig autorisieren müssen.

Die vorliegende Erfindung kann als Ersatz von Bargeld angewendet werden und demnach Anwendung im Handel finden, in der sich Zahler und Zahlungsempfänger persönlich gegenüber stehen und den für die Autorisierung notwendigen Transaktionsverweis mündlich austauschen. In anderen Ausführungsbeispielen wird die vorliegende Erfindung als Zahlungssystem bei Zahlungsvorgängen im Internet angewendet, beispielsweise in einem Web Shop. Der Transaktionsverweis wird dabei über den Web Shop kommuniziert. In weiteren Ausführungsbeispielen wird die vorliegende Erfindung als Zahlungssystem beim Telefon- oder Fernseh-Shopping angewendet.

Unabhängig vom Einsatzzweck der vorliegenden Erfindung werden je nach Ausführungsbeispiel unterschiedliche Übertragungskanäle zur Weitergabe des Transaktionsverweises genutzt. Der Transaktionsverweis kann in einem Telefonat durch eine Person oder über ein Sprachansagesystem mitgeteilt werden. In einem anderen Ausführungsbeispiel wird der Transaktionsverweis via Bote, SMS, MMS oder E-Mail ausgetauscht.

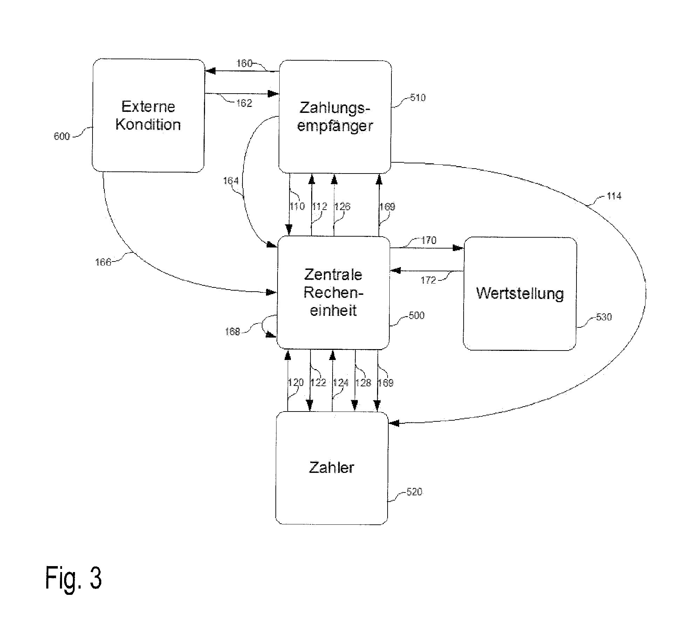

In Fig. 3 wird ein erstes bevorzugtes Ausführungsbeispiel gezeigt. Das erste bevorzugte Ausführungsbeispiel findet zB. beim Kauf einer Ware Anwendung: Der Verkäufer (Zahlungsempfänger) verrechnet den geschuldeten Betrag, indem er eine Forderung an den Käufer (Zahler) stellt, die dieser begleicht. Mit 'Transaktionen' sind die Rechnungen bzw. die ausgewiesenen Beträge gemeint. 'Transaktionsverweise' sind Identifikationsmerkmale, die für eine bestimmte Rechnung bzw. für einen spezifischen Bezahlvorgang angefordert werden. Unter'sensitiven und geschützten Daten', die bearbeitet werden sollen, sind die Systemkonten der Parteien zu verstehen, die im einen Fall belastet und im andern Fall mit einer entsprechenden Gutschrift versehen werden. Der Zahlungsempfänger 510 meldet sich von seinem Kassenterminal aus mit seiner PIN bei der Zentralrecheneinheit 500 an, wählt das Menü ""Rechnung ausstellen", gibt den eingeforderten Betrag ein und bestätigt dies 110. Die Zentralrecheneinheit 500 weist der Transaktion eine fortlaufende, interne Rechnungsnummer zu, verknüpft diese mit einem Transaktionsverweis und sendet diesen an den Zahlungsempfänger 510 zurück 112. Der Zahler 520 ist über sein Mobiltelefon ebenfalls mit dem System verbunden und wählt das Menü "Rechnung bezahlen". Dort wird er aufgefordert, den Transaktionsverweis, der auf die Rechnung verweist und der ihm der Zahlungsempfänger 510 über einen additiven Kanal (zB. visuell im Internet, mündlich, per SMS usw.) mitteilt 114, einzugeben und zu bestätigen 120. Die Zentralrecheneinheit 500 sendet dem Zahler 520 die Rechnung zu 122. Der Zahler 520 verifiziert die Rechnung und bestätigt diese 124. Nun werden Rechnungsbetrag, Transaktionsverweis und die Kundenidentifikatoren in Beziehung gebracht und verarbeitet 168. Stimmen die Daten überein, bzw. haben die Parteien die Transaktion willentlich eingeleitet und gegenseitig autorisiert, erhalten Zahler 520 und Zahlungsempfänger 510 je eine Mitteilung, dass die Zahlung erfolgt ist 126/128. Die Anzeige der aktuellen Kontostände sind mit 126 und 128 beziffert. Die Bestätigung über die erfolgte Belastung bzw. Gutschrift ist mit 169 gekennzeichnet. Die Wertstellung 530 steht stellvertretend für ein Kredit- oder Zahlungsinstitut, das den Geldtransfer abwickelt (Auftrag 170, Bestätigung 172).

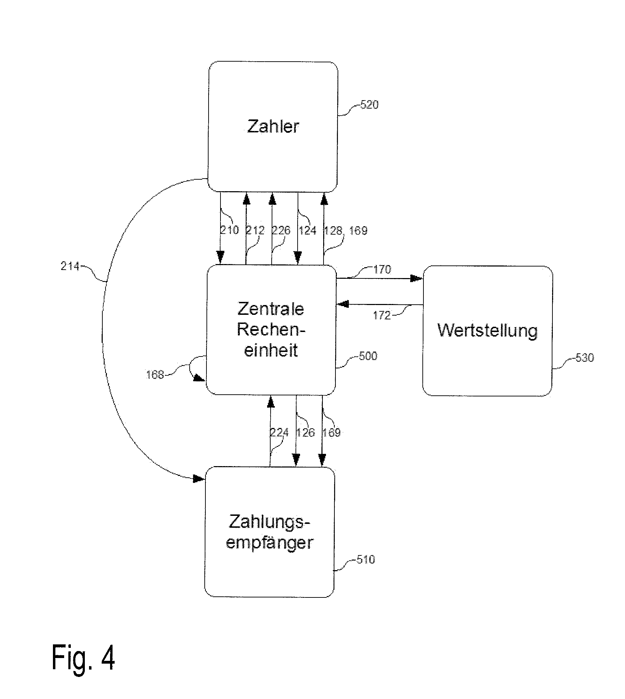

In Fig. 4 wird ein zweites bevorzugtes Ausführungsbeispiel gezeigt. Im zweiten bevorzugten Ausführungsbeispiel verweist der Transaktionsverweis nicht auf eine Rechnung, sondern auf einen bestimmten Zahlungsempfänger 510, an den wiederholt Rechnungen versendet werden, etwa in Form von regelmäßigen Zahlungsaufforderungen eines Dienstleisters (zB. Telefonrechnungen). Der Zahler 520 fordert einen Transaktionsverweis an 210 / 212 und teilt diesen dem Zahlungsempfänger 510 über einen additiven Kanal mit 214. Daraufhin erstellt der Zahlungsempfänger 510 eine Rechnung, versieht diese mit dem erhaltenen Transaktionsverweis, und übermittelt Rechnung und Transaktionsverweis an die Zentralrecheneinheit 500, Abfolge 224. Die Zentralrecheneinheit ordnet diese Daten dem Zahler 520 zu 226. Der Zahler 520 verifiziert die Rechnung und bestätigt diese 124 wie im ersten bevorzugten Ausführungsbeispiel. Nun werden Rechnungsbetrag, Transaktionsverweis und die Kundenidentifikatoren in Beziehung gebracht und verarbeitet 168. Stimmen die Daten überein, bzw. haben die Parteien die Transaktion willentlich eingeleitet und gegenseitig autorisiert, erhalten Zahler 520 und Zahlungsempfänger 510 je eine Mitteilung, dass die Zahlung erfolgt ist 126 /128 bzw. 169. Der Zahler 520 bestimmt den Zeitpunkt selbst, zu dem er die Rechnung autorisiert und bezahlt.

Fig. 3 zeigt neben dem ersten bevorzugten Ausführungsbeispiel ein drittes bevorzugtes Ausführungsbeispiel, das sich mit dem ersten bevorzugten Ausführungsbeispiel in den Schritten 110 bis 128 deckt. Darüber hinaus wird es um eine oder mehrere Bedingungen erweitert, die vor dem vollständigen Abschluss der Transaktionsverarbeitung zu erfüllen sind. Eine solche Bedingung könnte beispielsweise die Eingabe einer Paketnummer sein: Ehe das Systemkonto des Kunden belastet wird 169, muss sichergestellt sein, dass der Händler die Ware auch tatsächlich an den Kunden versandt hat. Umgekehrt muss der Händler die Gewissheit haben, dass die Bezahlung der Ware nach Erfüllung der Bedingung ebenfalls garantiert ist. Der Zahlungsempfänger 510 erstellt 160 eine externe Kondition 600 (zB. Auftrag an einen Paketdienstleister) und erhält dafür eine spezifische Identifikationsnummer 162. Diese teilt er der Zentralrecheneinheit 500 zusammen mit dem die Zahlung betreffenden Transaktionsverweis mit 164. Die Zentralrecheneinheit 500 prüft die externe Kondition 600 ihrerseits 166 (zB. durch Abfragen der Paketnummer beim Paketdienstleister). Die Bedingungen müssen innerhalb einer zeitlichen Spanne erfüllt sein, ehe die Transaktion verarbeitet wird 168. Stimmen die Daten überein bzw. sind die Bedingungen erfüllt, werden die Belastungen bzw. Gutschriften durchgeführt 126 /128. Ansonsten wird der Auftrag abgebrochen und die Rechnung verliert ihre Gültigkeit. Es können beliebig viele Bedingungen in die Abfolge eingebaut werden.

In einem anderen Ausführungsbeispiel kann der Nutzer seinen Systemkontostand abfragen. Hierzu loggt er sich mit seiner PIN ins System ein und wählt das Menü "mein Konto" aus. Nach einer erfolgreichen Abwicklung einer Transaktion wird der aktualisierte Systemkontostand automatisch angezeigt 126 /128.

In einem anderen Ausführungsbeispiel kann der Nutzer von jedem digitalen Endgerät, das über einen Internetzugang verfügt, auf das eigene Systemkonto zugreifen und dieses verwalten, auch wenn das Endgerät nicht über nutzerdefinierende Informationen verfügt. Der Nutzer loggt sich mit seiner PIN ins System ein, wählt das Menü "Internet-Schlüssel" und generiert dort einen *Internet Access Key.* Dieser besteht aus einem mehrstelligen, einmalig gültigen Benutzercode und einer zeitlich beschränkt gültigen PIN. Unter einer bestimmten URL kann sich der Benutzer mit diesen Codes einwählen. Sobald er das System verlässt, verlieren die Codes ihre Gültigkeit und müssen für einen weiteren Einstieg neu angefragt werden.

In einem weiteren Ausführungsbeispiel kann der Nutzer das digitale Endgerät auswechseln, ohne seine nutzerdefinierenden Daten und Systemkonten zu verlieren. Hierzu loggt er sich mit seiner PIN ins System ein und generiert einen zeitlich beschränkt gültigen *Transfercode.* Nun kann der Nutzer die Systemsoftware auf einem anderen digitalen Endgerät laden und sich mit dem Transfercode ins System einloggen. Das System teilt dem Nutzer eine neue PIN zu, mit der er auf seine bisherigen Daten zugreifen kann.

In einem anderen Ausführungsbeispiel kann der Nutzer auch eine neue PIN anfordern. Hierzu loggt er sich mit seiner bisherigen PIN ins System ein und generiert eine "neue PIN". Für alle zukünftigen Aktionen gilt ab diesem Moment nur noch die neue PIN.

In einem weiteren Ausführungsbeispiel kann der Nutzer den Kreis der Systemnutzer selber erweitern. Hierzu loggt sich der Vermittler mit seiner PIN ins System ein und wählt dort "Freunde einladen". Nun wird er aufgefordert, die Telefonnummer des zukünftigen Nutzers einzugeben und dann zu bestätigen. Der neue Nutzer wählt die in der erhaltenen SMS angegebene URL an und kann so die Systemsoftware laden. Nach Beendigung des Vorganges teilt das System dem neuen Nutzer eine PIN zu, mit der er sich künftig ins System einloggt.

In einem Ausführungsbeispiel bietet das System ein Verfahren zur Verrechnung von Guthaben und Belastungen an. Wenn diese Verbindlichkeiten *innerhalb* des Systems abgehandelt werden (zB. im Falle eines Gutscheinsystems oder einer Komplementärwährung), so leistet es neben der Verrechnung (Clearing) auch die Wertstellung (Settlement) 170 /172, d.h. die Verbindlichkeiten werden nicht nur angezeigt, sondern auch verfügbar gemacht. Das Clearing bereitet erstens die für die Transaktion notwendigen Informationen auf und leitet zweitens den autorisierten Abbuchungsauftrag des Zahlers zur Wertstellung weiter.

In einem anderen Ausführungsbeispiel werden für Verrechnungen, die Auswirkungen auf systemfremde Konten haben, herkömmliche Banken oder andere Finanzinstitute 530 mit der Wertstellung (Settlement) 170/172 beauftragt. Hierzu müssen die Bankverbindung, zB Kontonummer und Bankleitzahl, IBAN und BIC, oder Kreditkartendaten der beteiligten Parteien bekannt sein.

Die Einzelheiten, die in der obigen Beschreibung von Ausführungsbeispielen enthalten sind, sollen nicht als Einschränkung des Schutzbereichs der Erfindung zu verstehen sein, sondern als exemplarische Darstellung einiger ihrer Ausführungsformen. Viele Varianten sind möglich und dem Fachmann sofort ersichtlich. Insbesondere betrifft dies Variationen, die eine Kombination von Merkmalen der einzelnen Ausführungsbeispiele umfassen, die in der vorliegenden Spezifikation offenbart sind. Daher soll der Bereich der Erfindung nicht durch die dargestellten Ausführungsbeispiele, sondern durch die angehängten Ansprüche und ihre rechtlichen Äquivalente bestimmt sein.

## Patentansprüche

1. Verfahren zum Genehmigen einer Transaktion in einer Zentralrecheneinheit, wobei das Verfahren umfasst:
Empfangen einer Transaktion von einem Gläubiger, wobei die Transaktion frei von Verweisen auf einen Schuldner der Transaktion ist;
Speichern der Transaktion in der Zentralrecheneinheit, wobei die gespeicherte Transaktion einem Transaktionsverweis zugeordnet wird, der ab dem Zeitpunkt seiner Zuordnung nur für eine bestimmte Zeitdauer gültig ist und maximal sechs Zeichen umfasst, und der zumindest nach Ablauf der Gültigkeit erneut für eine weitere Transaktion verwendet wird;
Empfangen des Transaktionsverweises von dem Schuldner;
Überprüfen der Gültigkeit des empfangenen Transaktionsverweises;
Identifizieren der gespeicherten Transaktion, die dem empfangenen Transaktionsverweis zugeordnet ist;
Senden der identifizierten Transaktion an den Schuldner;
Empfangen der Genehmigung der Transaktion vom Schuldner innerhalb einer vorbestimmten Zeitdauer ab dem Senden der identifizierten Transaktion.

2. Verfahren nach Anspruch 1,
wobei der Gläubiger den seiner Transaktion zugeordneten Transaktionsverweis von der Zentralrecheneinheit erfragt, und
wobei der Gläubiger den Transaktionsverweis unabhängig von Maschinen an den Schuldner übermittelt.

3. Verfahren nach Anspruch 1,
wobei der Schuldner den Transaktionsverweis vor dem Speichern der Transaktion von der Zentralrecheneinheit erfragt,
wobei der Schuldner den Transaktionsverweis unabhängig von Maschinen an den Gläubiger übermittelt, und
wobei die Zentralrecheneinheit den Transaktionsverweis spätestens zum Zeitpunkt des Speicherns der Transaktion vom Gläubiger empfängt.

4. Verfahren nach einem der vorhergehenden Ansprüche,
wobei das Zuordnen der Transaktion zum jeweiligen Transaktionsverweis das Zuordnen eines lokalen Gültigkeitsbereiches zu dem Transaktionsverweis umfasst, und
wobei das Überprüfen der Gültigkeit des Transaktionsverweises das Vergleichen des Aufenthaltsortes des Schuldners mit dem lokalen Gültigkeitsbereich umfasst.

5. Verfahren nach einem der vorhergehenden Ansprüche,
wobei die Zentralrecheneinheit die genehmigte Transaktion ausführt und vor dem Ausführen der Transaktion das Erfüllen einer oder mehrerer Bedingungen innerhalb vorbestimmter Zeitspannen prüft, die den Gläubiger und/oder Schuldner der Transaktion betreffen.

6. Verfahren nach einem der vorhergehenden Ansprüche,
wobei die Zentralrecheneinheit Profile für Gläubiger und Schuldner umfasst, die Eigenschaften des jeweiligen Profilinhabers beinhalten, und
wobei die Zentralrecheneinheit die genehmigte Transaktion unter Einbeziehung von Eigenschaften aus den Profilen des Gläubigers und/oder des Schuldners einbezieht.

7. Verfahren nach Anspruch 6,
wobei die Transaktion eine Überweisung eines Zahlungsbetrages zwischen Gläubiger und Schuldner umfasst,
wobei die Profile von Gläubiger und Schuldner jeweils eine Bankverbindung oder Kreditkartendaten umfassen, und
wobei das Ausführen der Transaktion das Durchführen der Überweisung umfasst.

8. Verfahren nach einem der vorhergehenden Ansprüche, wobei ein Transaktionsverweis nach Genehmigung der zugeordneten Transaktion auch vor Ablauf seiner Gültigkeitsdauer für eine weitere Transaktion verwendet werden kann.

9. Verfahren zum Genehmigen einer Transaktion über ein mobiles Kommunikationsgerät,
wobei das Verfahren umfasst:
Eingeben eines Transaktionsverweises innerhalb seiner Gültigkeitsdauer über das mobile Kommunikationsgerät, wobei dem Transaktionsverweis eine gespeicherte Transaktion zugeordnet ist, und wobei der Transaktionsverweis maximal sechs Zeichen umfasst und ab dem Zeitpunkt seiner Zuordnung nur für eine bestimmte Zeitdauer gültig ist;
Empfangen der dem Transaktionsverweis zugeordneten Transaktion; und
Genehmigen der empfangenen Transaktion über das mobile Kommunikationsgerät.

10. Verfahren nach Anspruch 9, wobei der Transaktionsverweis nur dann gültig ist, wenn sich das mobile Kommunikationsgerät bei der Eingabe des Transaktionsverweises innerhalb eines lokalen Gültigkeitsbereiches befindet.

11. Verfahren nach einem der vorhergehenden Ansprüche, wobei der Transaktionsverweis ab dem Zeitpunkt seiner Zuordnung zur Transaktion maximal eine Minute oder maximal 15 Minuten oder maximal 60 Minuten oder maximal einen Tag gültig ist.

12. Verfahren nach einem der vorhergehenden Ansprüche, wobei der Transaktionsverweis maximal ein oder maximal zwei oder maximal drei oder maximal vier oder maximal fünf Zeichen umfasst.

13. Verfahren nach einem der vorhergehenden Ansprüche, wobei die Anzahl der Zeichen der Transaktionsverweise in Abhängigkeit von einer beobachteten oder erwarteten Transaktionsrate variiert wird.

14. Zentralrecheneinheit zum Genehmigen von Transaktionen, dazu eingerichtet, das Verfahren nach einem der Ansprüche 1-8 auszuführen.

15. Computerlesbares Medium, das Programmanweisungen enthält, die einen oder mehrere Prozessoren veranlassen, das Verfahren nach einem der Ansprüche 1-13 auszuführen.
